# EUROPEAN PATENT SPECIFICATION

(11) **EP 4 191 292 B1**
(45) Date of publication and mention of the grant of the patent: **14.10.2026**
(21) Application number: 22156391.9
(22) Date of filing: 11.02.2022
(51) Int. Cl.: G02B 5/09, F21S 10/00, G02B 17/00, G02B 17/06, G09F 13/12, G09F 19/16

(54) **CONVEX INFINITY MIRROR DEVICES**
KONVEXE UNENDLICHE SPIEGELVORRICHTUNGEN
DISPOSITIFS DE MIROIR CONVEXE À L'INFINI

(30) Priority: 06.12.2021 US 202117542975
(43) Date of publication of application: 07.06.2023
(73) Proprietor: Wistron Corporation, New Taipei City 22181 (TW)
(72) Inventor: Su, Yi-Hsiang, 22181 New Taipei City (TW); Kao, Chia Lin, 22181 New Taipei City (TW)
(74) Representative: 2K Patent Partnerschaft mbB

(56) References cited:
- CN-U- 203 686 735
- GB-A- 2 586 280
- JP-A- 2006 303 122
- KR-A- 20070 104 029
- KR-A- 20130 018 782
- US-A- 1 396 693
- US-A- 4 164 823
- US-A- 5 951 143
- US-A1- 2006 102 914
- ANONYMOUS: "How Infinity Mirrors Work - With Experiments : 13 Steps - Instructables", 29 July 2021 (2021-07-29), pages 1 - 7, XP055942384, Retrieved from the Internet <URL:https://web.archive.org/web/20210729165542/https://www.instructables.com/How-Infinity-Mirrors-Work-With-Experiments/> [retrieved on 20220713]

## Description

### BACKGROUND

### Technical Field

The present disclosure relates generally to devices for creating infinity mirror display effects, and, more particularly, to an infinity mirror lighting module with a convex mirror and methods for its manufacturing.

### Description of Related Art

The infinity mirror effect is commonly observed in rooms having mirrors on oppositely facing walls. The mirrors show images of the same object repeated apparently endlessly, but with each new image somewhat smaller and appearing farther away. One arrangement is to place a partially transparent mirror in front of a fully reflecting mirror and placing an object or a light source between the mirrors. A drawback, however, in conventional infinity mirror devices, object or light source images tend to be compressed in a narrow region when viewing from an angle perpendicular to the surface of the mirrors. As such, what is desired is infinity mirror device that creates well separated and realistic images of an object or a light source when viewed from a wide range of angles.

US 4 164 823 A discloses an infinity mirror device according to the preamble of claim 1. Positioned immediately behind a front panel that includes an aperture serving as a mask is a partially silvered first mirror. Positioned immediately behind the partially silvered first mirror is a frusto-conically shaped member having its internal periphery silvered or polished. Disposed around the frusto-conically shaped member and extending through a surface thereof are a plurality of lamps, such a tiny lightbulbs Positioned immediately behind the frusto-conically shaped member is a spherical convex reflector serving as a second mirror. Light emanating from the lamps will experience multiple reflections between the reflective surface of the first mirror and the reflective surface of the spherical convex reflector so as to create an image viewable through the aperture of the front panel which appears to extend into infinity. However, the silvered or polished surface of the frusto-conically shaped member does not reflect light generated by the lamps toward a center of a space between the partially silvered front mirror and the second mirror.

### SUMMARY

It is an object of the present disclosure to provide an infinity mirror device that is configured to more precisely provide a desired infinity mirror effect and can be assembled in an easy and convenient manner.

This problem is solved by an infinity mirror device as claimed by claim 1. Further advantageous embodiments are the subject-matter of the dependent claims.

To make the aforementioned more comprehensible, several embodiments accompanied with drawings are described in detail as follows.

### BRIEF DESCRIPTION OF THE DRAWINGS

Figs. 1A and 1B illustrate an infinity mirror lighting device with a convex mirror according an embodiment of the present disclosure.
Figs. 2A-2C illustrate a cross-section of a spherical convex mirror and its effect in an infinity mirror lighting device.
Figs. 3A-3C illustrate a cross-section of a pyramid convex mirror and its effect in an infinity mirror lighting device.
Fig. 4 illustrates how a convex bottom mirror creates bent images.
Fig. 5 is flow-chart illustrating a process for selecting an acceptable curvature range for the convex bottom mirror.
Figs. 6A and 6B illustrate a calculation of an inward angle of a reflected image.
Figs. 7A and 7B illustrate a calculation of curvature of a first-order reflected image.
Figs. 8A and 8B illustrate a calculation of a viewing angle difference between the light source and a 10th order reflected image.
Figs. 9A-9C illustrate a way to determine an acceptable range of bending for the reflected images.
Figs. 10A-10E illustrate 3D simulated infinity mirrors with convex bottom mirrors of different curvatures.
Figs. 11A and 11B illustrate a comparison between a 3D simulation and an actual infinity mirror device of the same dimension.
Figs. 12A and 12B illustrate a first exemplary method for making the convex bottom mirror.
Figs. 13A and 13B illustrate a second exemplary method for making the convex bottom mirror.
Figs. 14A and 14B illustrate a third exemplary method for making the convex bottom mirror.
Figs. 15A-15C illustrate an infinity mirror device assembly according to an embodiment of the present disclosure.

The drawings accompanying and forming part of this specification are included to depict certain aspects of the disclosure. A clearer conception of the disclosure, and of the components and operation of systems provided with the disclosure, will become more readily apparent by referring to the exemplary, and therefore non-limiting, embodiments illustrated in the drawings, wherein like reference numbers (if they occur in more than one view) designate the same elements. The disclosure may be better understood by reference to one or more of these drawings in combination with the description presented herein.

### DESCRIPTION OF THE EMBODIMENTS

The present disclosure relates to an infinity mirror display device. Preferred embodiments of the present disclosure will be described hereinafter with reference to the attached drawings.

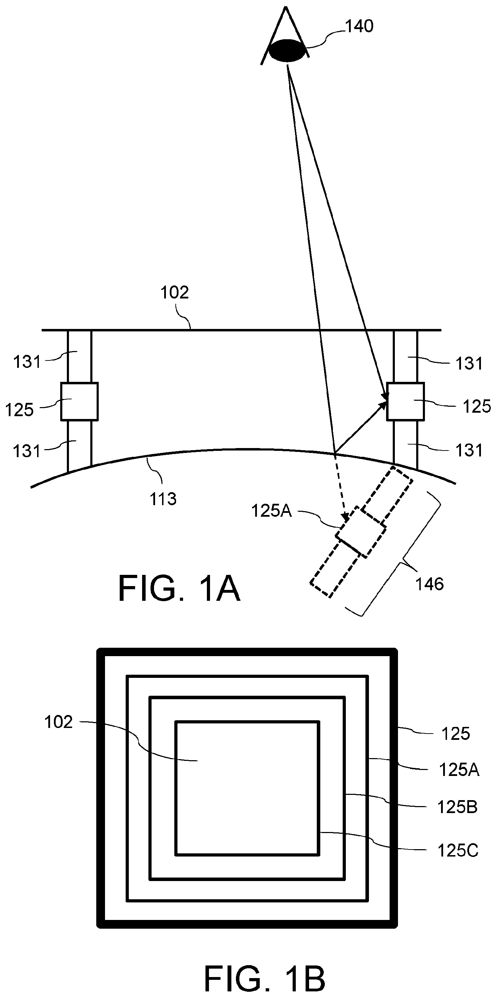

Figs. 1A and 1B, which are a side and a top view, respectively, of an infinity mirror lighting device with a convex mirror according an embodiment of the present disclosure. Referring to Fig. 1A, the infinity mirror lighting device includes a partially transparent front mirror 102, a convex bottom mirror 113, a light source 125 and a frame 131 for securing the mirrors 102 and 113 and the light source 125. The front mirror 102 and the convex bottom mirror 113 each has a reflective surface facing each other, so that a light beam from the light source 125 bounces back and forth between the two mirrors 102 and 113 many times until it becomes too dim to be visible. When an eye 140 views the infinite mirror lighting device from an angle perpendicular to the front mirror 102, it sees a reflection 146 including that of a light source 125 tilted away from a straight extension of the real object (131 and 125) due to the convex nature of the bottom mirror 113.

Referring to Fig. 1B, when the infinity mirror lighting device shown in Fig. 1A is viewed from straight above the front mirror 102, the square light source 125 creates first order reflected image 125A, second order reflected image 125B and third order reflected image 125C, etc. The light source 125 and the reflected images 125A, 125B and 125C are far apart from each other due to the convex mirror 113.

In one embodiment, the front mirror 102's reflective surface is flat as shown in Fig. 1. In another embodiment, the partially transparent front mirror 102 also has a convex reflective surface (not shown) similar to the convex bottom mirror 113. The two convex reflective surfaces face each other so that the reflected image separation effect is augmented.

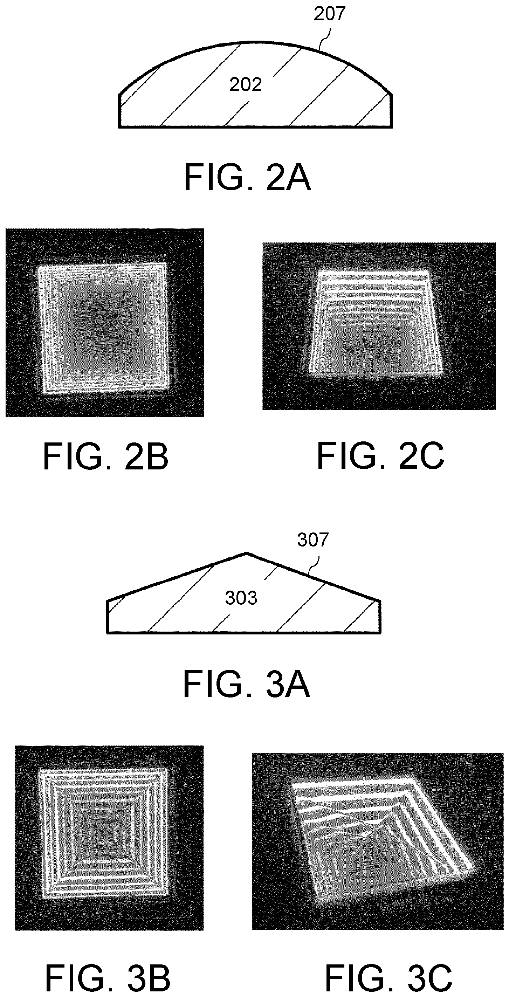

Figs. 2A-2C illustrate a cross-section of a spherical convex mirror 202 and its effect in an infinity mirror lighting device. Referring to Fig. 2A, the spherical convex mirror 202 has a rounded outward surface 207 like the exterior of a sphere or circle in a cross-sectional view. The surface 207 is reflective.

Fig. 2B is a top view of an infinity mirror lighting device using the spherical convex mirror 202 as a bottom mirror. A linear light source is placed on four edges of the lighting device. Reflected images of the light source are well separated in the top view shown in Fig. 2B.

Fig. 2C is an angled view of the infinity mirror lighting device shown in Fig. 2B. The separation of the reflected images is more pronounced in the angled view than in the top view. However, the reflected images show some degrees of bending due to the curved surface 207 of the spherical convex mirror 202.

Figs. 3A-3C illustrate a cross-section of a pyramid convex mirror 303 and its effect in an infinity mirror lighting device. Referring to Fig. 3A, the pyramid convex mirror 303 has a slanted outward surface 307 like the exterior of a pyramid or a triangle in a cross-sectional view. The surface 307 is totally reflective.

Fig. 3B is a top view of an infinity mirror lighting device using the pyramid convex mirror 303 as a bottom mirror. A linear light source is placed on four edges of the lighting device. Reflected images of the light source are well separated in the top view shown in Fig. 3B.

Fig. 3C is an angled view of the infinity mirror lighting device shown in Fig. 2B. The separation of the reflected images is more pronounced in the angled view than in the top view. However, the reflected images show distortions due to the discontinuity or corners of the surface 307 of the pyramid convex mirror 303.

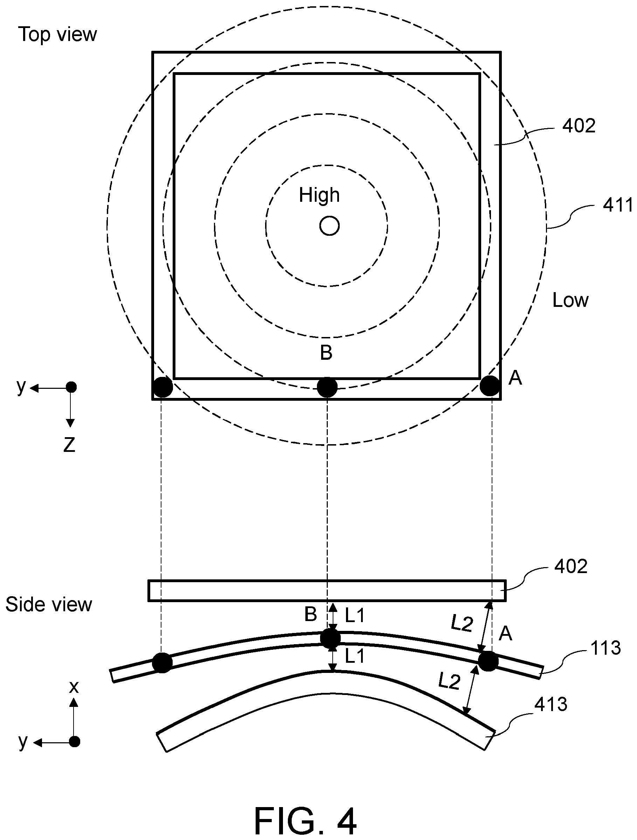

Fig. 4 illustrates how a convex bottom mirror creates bent images. In a top view, a liner light source 402 form a square with straight edges. Dotted lines 411 represent a contour map of the convex bottom mirror 113 shown in Fig. 1A. Surface of the convex bottom mirror 113 is high in the center and low at the edge. Therefore, point A is lower than point B on the surface of convex bottom mirror 113.

Referring to a side view of Fig. 4, a distance L1 between the light source 402 and the surface of the convex bottom mirror 113 at point B is smaller than a distance L2 between the light source 402 and the surface of the convex bottom mirror 113 at point A. Therefore, a reflected image 413 of the light source 402 is bent due to the distance differences. The separation of reflected images is desired, but the bending is not.

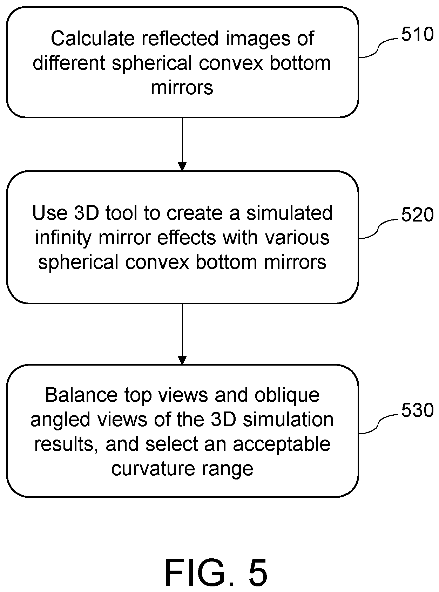

Fig. 5 is flow-chart illustrating a process for selecting an acceptable curvature range for the convex bottom mirror. In block 510, the process calculates reflected images of different spherical convex bottom mirrors. In block 520, the process uses 3D tools to create a simulated infinite mirror effects with various spherical convex bottom mirrors. In block 530, the process balances top views and oblique angled views of the 3D simulation results and selects an acceptable curvature range for the spherical convex bottom mirror, so that the reflected images are separated enough yet maintain an acceptable bending.

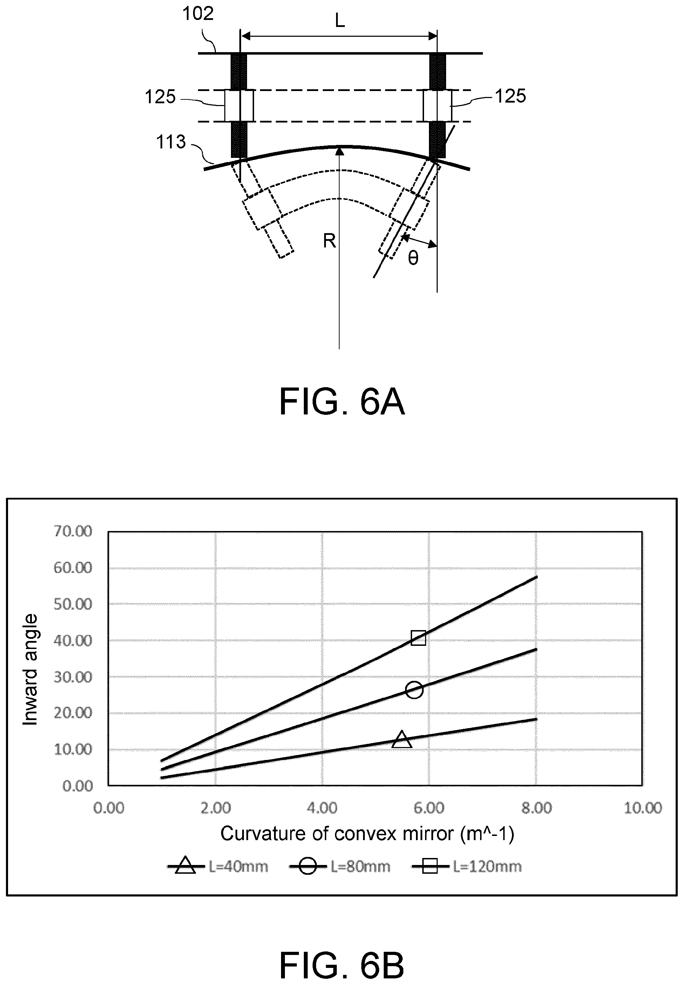

Figs. 6A and 6B illustrate a calculation of an inward angle of a reflected image. Referring to Fig. 6A, an inward angle θ of a first order reflected image is calculated by following equation: $θ \approx 2 ⋅ {sin}^{- 1} \left(\frac{L}{2 R}\right)$ Equation (1) where θ is an inward angle, L is a distance between two edges of the light source 125, and R is a radius of the convex bottom mirror 113.

When L is set at 40 mm, 80 mm or 120 mm, the inward angle θ is plotted against a curvature of the convex mirror as shown in Fig. 6B. The curvature is defined as 1/R. For a given L, the higher the curvature of the convex mirror is, the higher the inward angle θ becomes.

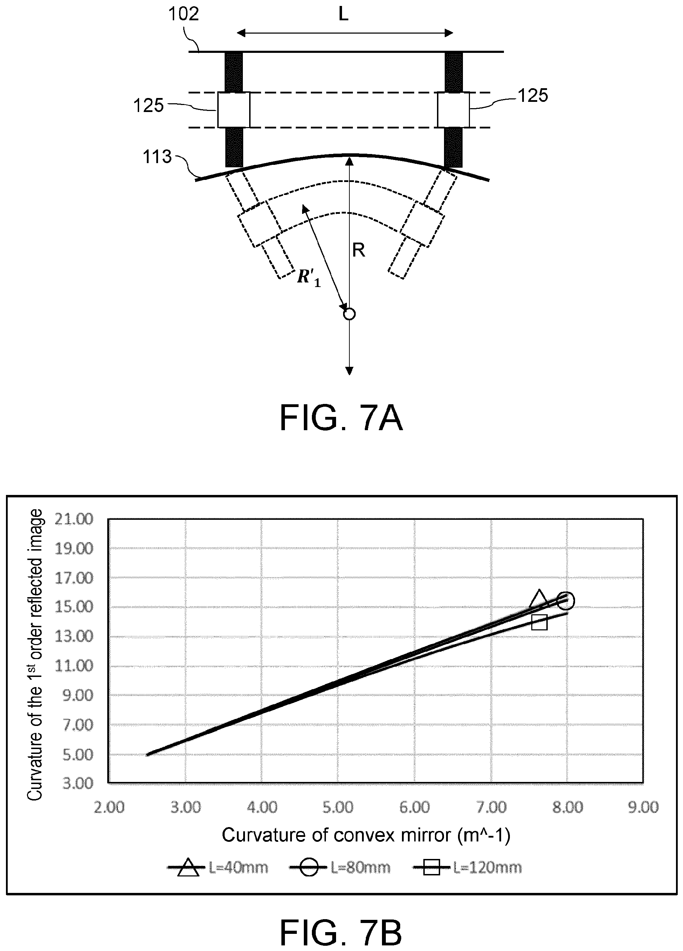

Figs. 7A and 7B illustrate a calculation of curvature of a first-order reflected image. Referring to Fig. 7A, a radius R'1 of the first-order reflected image can be expressed as: $R {′}_{1} \approx \frac{{L}^{2}}{8 h} + \frac{h}{2}$ Equation (2)
where $h = 2 ⋅ \left(\sqrt{{R}^{2} - {L}^{2} / 4}-\sqrt{{R}^{2} - {L}^{2} / 2}\right) ,$ R is the radius of the convex bottom mirror 113, and L is the distance between two edges of the light source 125.

Fig. 7B is a plot of curvature of the 1st order reflected image (1/ R'1) against curvature of the convex mirror (1/R). The plot shows that the higher the curvature of the convex mirror is, the higher the curvature of the 1st order reflected image becomes. Note that the distance L between two edges of the light source 125 does not make much difference to the plot.

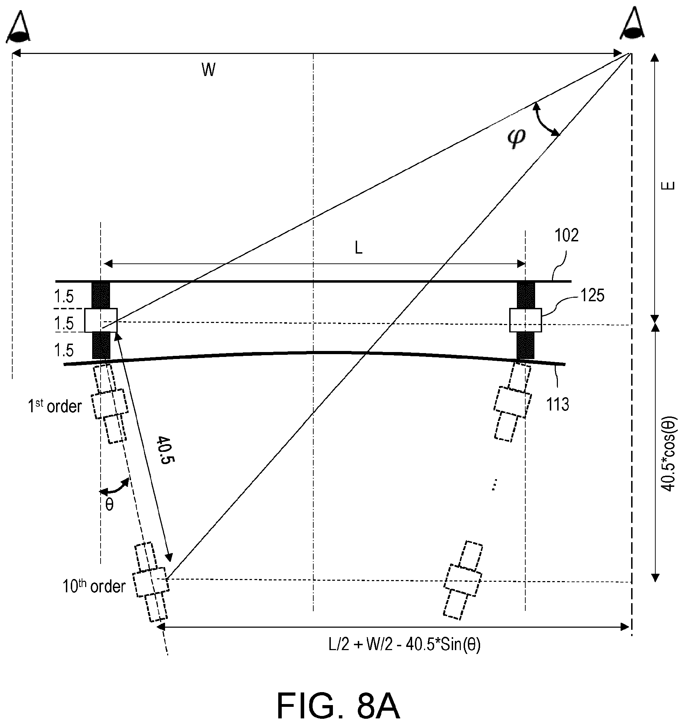

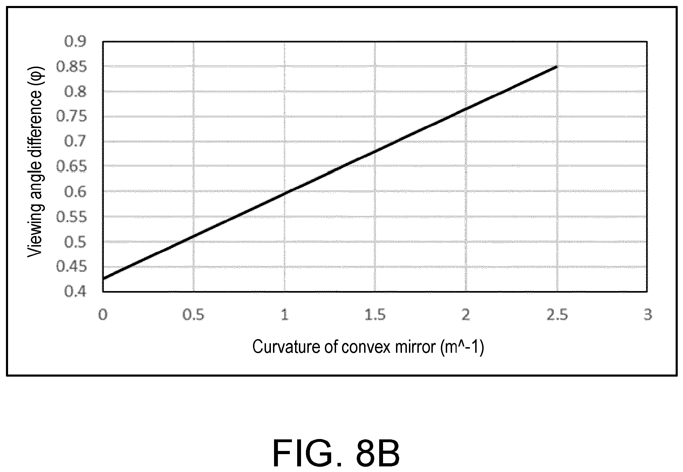

Figs. 8A and 8B illustrate a calculation of a viewing angle difference φ between the light source 125 and a 10th order reflected image. The higher the viewing angle difference φ is, the more separation between two neighboring reflected images is. In other words, higher φ means that the reflected images are more tilted inwardly. The viewing angle difference φ can be calculated by following equation. $φ \approx {tan}^{- 1} \left(\frac{L}{2 E}\right) - {tan}^{- 1} \left(\frac{\frac{L}{2} + \frac{W}{2} - 40.5 ∗ sinθ}{E + 40.5 ∗ cosθ}\right)$ Equation (3) where θ is calculated from Equation (1); R is the radius of the convex bottom mirror 113; L is the distance between two edges of the light source 125; E is a distance between a viewing eye and the light source 125 (50 mm); and W is distance between two eyes (60 mm).

Fig. 8B is a plot of the viewing angle difference against the curvature of the convex mirror. The higher the curvature is, the larger the viewing angle difference φ is. For human eyes to percept a separation between neighboring reflected images, the above viewing angle difference φ must be larger than 0.6 degree.

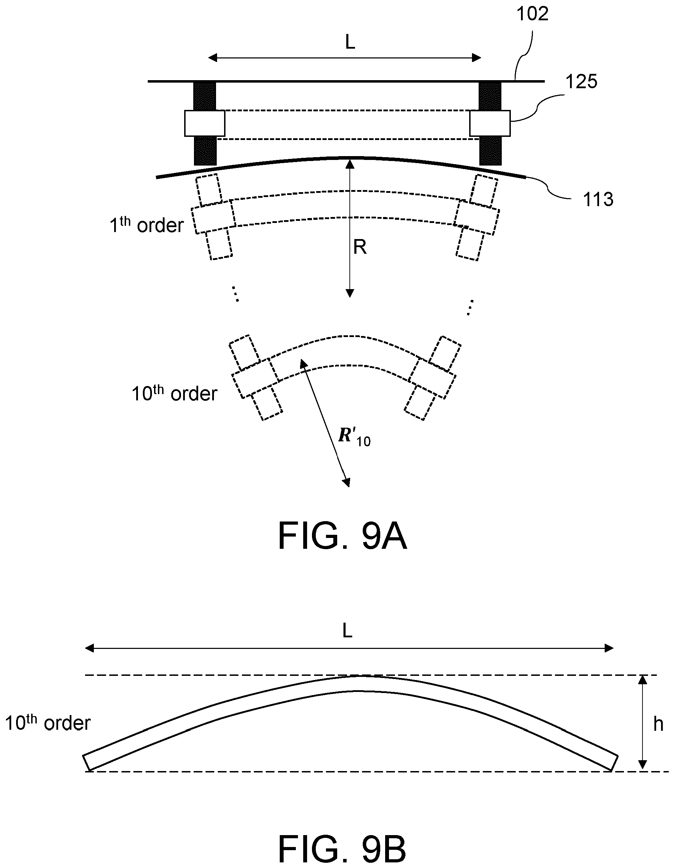

Figs. 9A-9C illustrate a way to determine an acceptable range of bending for the reflected images. Referring to Fig. 9A, R is the radius of the convex bottom mirror 113. R'10 is a radius of a 10th order reflected image. Referring to Figs. 9A and 9B, L is distance between two edges of the light source 125 and also a horizontal width of the 10th order reflected image. h is a vertical height of the 10th order reflected image and can be calculated from $h \approx 10 ⋅ \left(\sqrt{{R}^{2} - {L}^{2} / 4}-\sqrt{{R}^{2} - {L}^{2} / 2}\right)$).

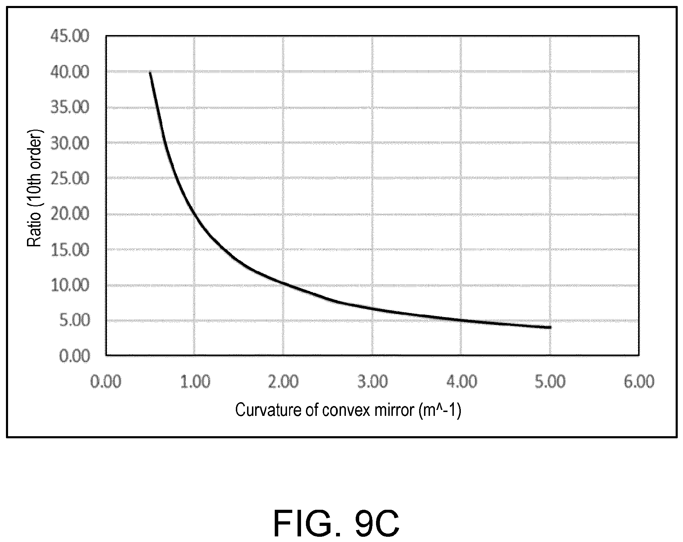

Perception of a curvature of the reflected image by human eyes is largely determined by Ratio10 = L/h. As shown in Fig. 9C, the higher the ratio is, the smaller the bending appears.

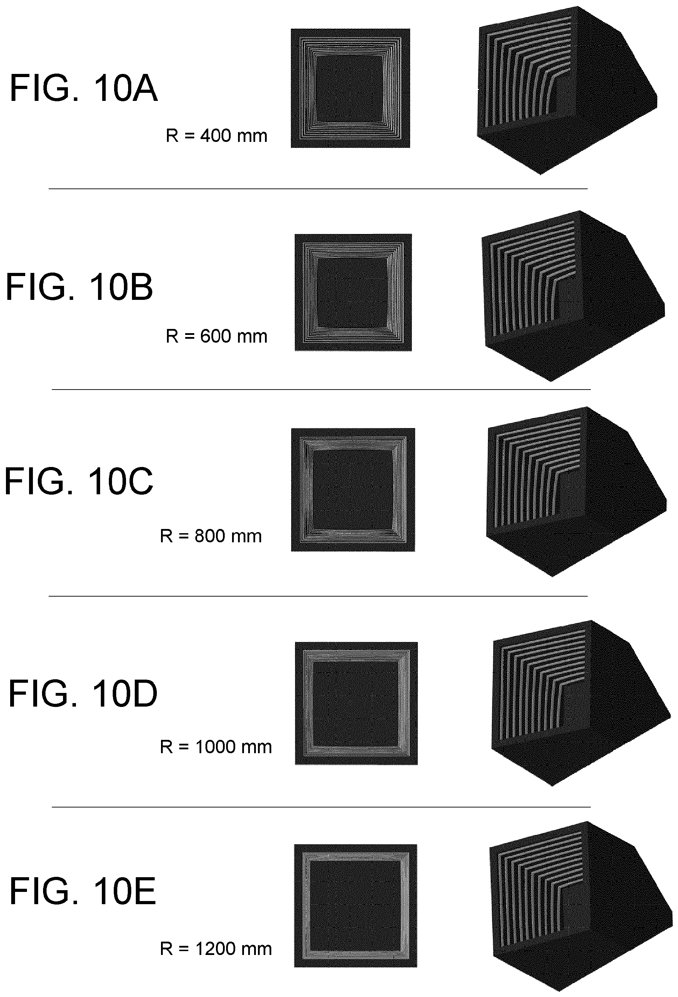

Figs. 10A-10E illustrate 3D simulated infinity mirror devices with convex bottom mirrors of different curvatures. The simulated infinity mirrors all have a square edged light source of 40 mm in side length (L). A top view is on the left-hand side; and an angled view is on the right-hand side. For the top view, viewing location is set at about 50 mm perpendicular to a center of a front mirror. For the angled view, the simulated infinity mirror devices rotate θx=10°, θy=35°, θz=10°. The top view serves to illustrate the separation of the reflected images; while the angled view serves to illustrate the bending of the reflected images.

Fig. 10A shows a simulated infinity mirrors with a convex bottom mirror that has a radius of 400 mm. Although the reflected images are well separated from the top view, the reflected images show bending from the angled view. Fig. 10B shows a simulation with a convex bottom mirror that has a radius of 600 mm. The separation becomes less, and so is the bending. Figs. 10C-10E shows simulation with a convex bottom mirror that has a radius of 800 mm, 1000 mm, and 1200 mm, respectively. When balancing the need for reflected image separation and the need to less bending, radius between 600 mm to 1200 mm are found to be acceptable for L less than 50 mm.

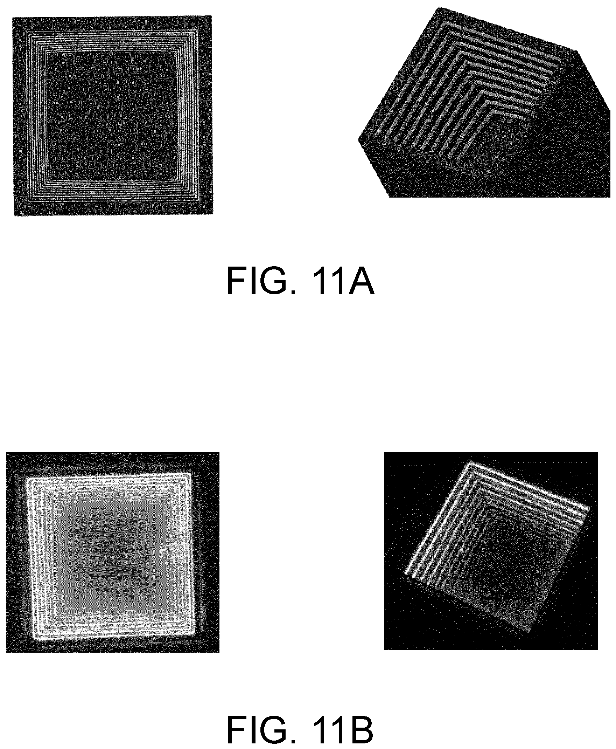

Figs. 11A and 11B illustrate a comparison between a 3D simulation and an actual infinity mirror device of the same dimension. Fig. 11A shows a simulated top view and an angled view. Fig. 11B shows an actual device's top view and an angled view. The simulated and the actual infinity mirror device look substantially the same.

Although square infinity mirror devices are so far discussed, in other embodiments, the convex bottom mirror of the present disclosure can be used in a circle, diamond shaped or other types of infinity mirror devices.

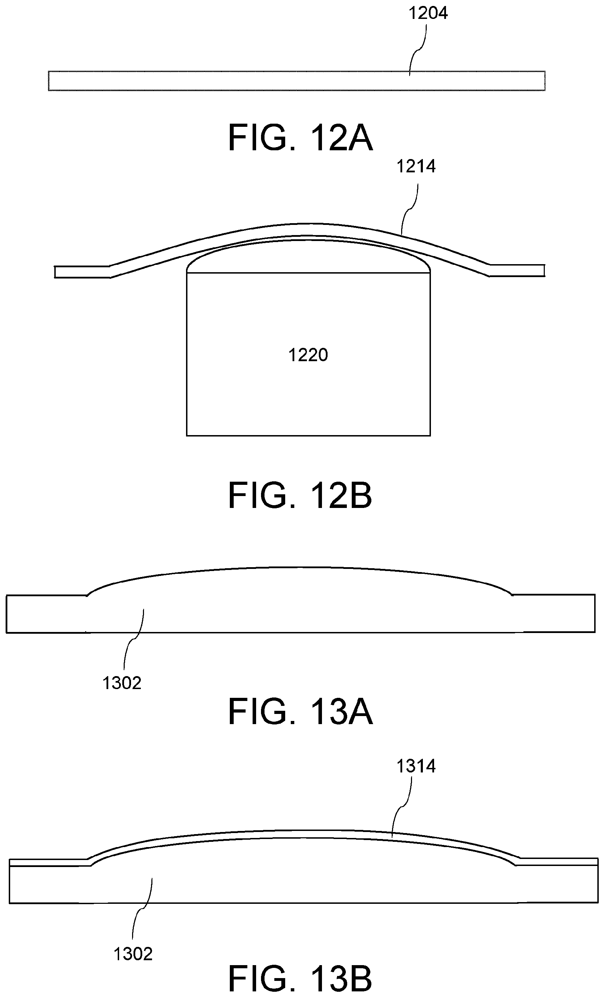

Figs. 12A and 12B illustrate a first exemplary method for making the convex bottom mirror. The first exemplary method begins with a flat reflective metal plate 1204 as shown in Fig. 12A. Referring to Fig. 12B, the metal plate 1204 is stamped into convex mirror with a desired curvature determined by a stamping die 1220.

Figs. 13A and 13B illustrate a second exemplary method for making the convex bottom mirror. The second exemplary method begins with a molded plastic part 1302 with a desired convex surface contour as shown in Fig. 13A. The molded plastic part 1302 is then sputtered with a reflective metal to form a reflective surface 1314 which takes the convex contour of the plastic part 1302.

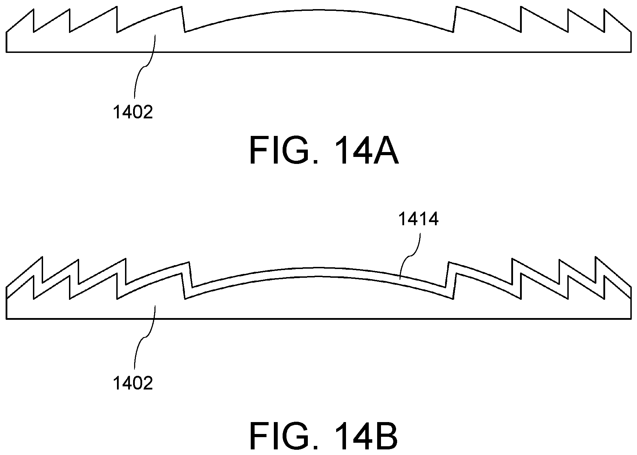

Figs. 14A and 14B illustrate a third exemplary method for making the convex bottom mirror. The third exemplary method similarly begins with a molded plastic part 1402 which instead has a Fresnel lens structure. The Fresnel lens structure is much more compact than that of its equivalent plano-convex lens structure. As shown in Fig. 14B, a layer of reflective metal 1414 is then sputtered on the plastic part 1402 to form a Fresnel convex mirror surface. A disadvantage, however, is when an overall size of the plastic part 1402 is small, the sputtered metal may fill up the valleys of the Fresnel lens structure.

The partially transparent front mirror 102 is exemplarily made of a transparent plastic material having a partially reflective coating. As described earlier, the partially transparent front mirror 102 can also has a convex reflective surface similar to the convex bottom mirror 113.

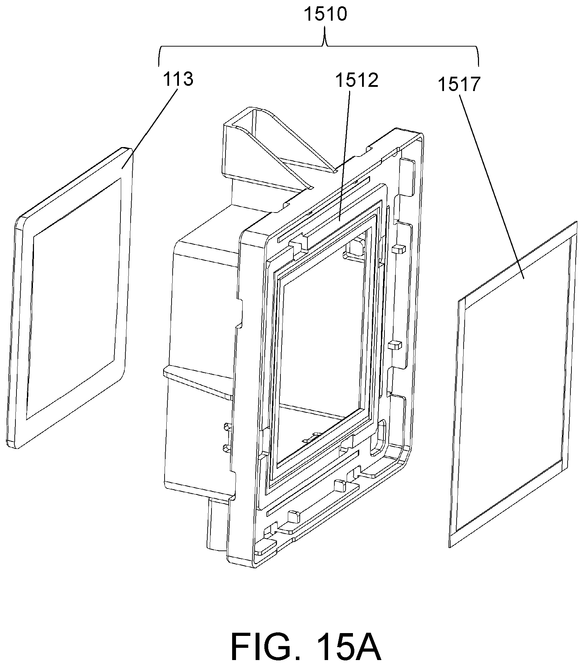

Figs. 15A-15C illustrate an infinity mirror device assembly according to an embodiment of the present disclosure. Fig. 15A shows a rear frame sub-assembly 1510 which includes a convex bottom mirror 113, a rear frame 1512 and a first reflective sheet 1517. The convex bottom mirror 113 is secured at a bottom of the rear frame 1512. The first reflective sheet 1517 is disposed on side walls of the rear frame 1512 for reflecting light into the internal space of the rear frame 1512.

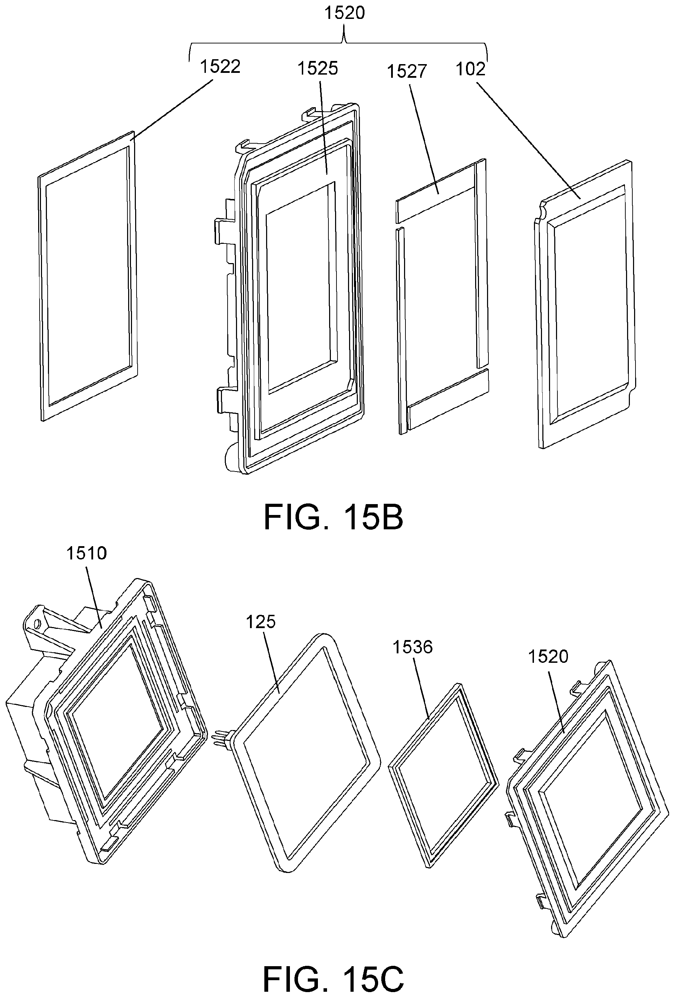

Fig. 15B shows a front bezel sub-assembly 1520 which includes a second reflective sheet 1522, a front bezel 1525, a double-sided tape 1527 and a partially transparent front mirror 102. The second reflective sheet 1522 is disposed on the side walls of the front bezel 1525 for reflecting light into the internal space of the front bezel 1525. The double-sided tape 1527 glues the front mirror 102 to the front bezel 1525. In an embodiment, the partially transparent front mirror 102 has a 10% penetration rate.

Fig. 15C shows a finishing assembly of the infinity mirror device of the present disclose. The finishing assembly includes the rear frame sub-assembly 1510, a light source 125, a light dispersion lens 1536 and the front bezel sub-assembly 1520. The light source 125 is made of a plurality of LED light emitters mounted on a square ring of printed circuit board assembly (PCBA). The plurality of LED light emitters can be of a uniform white color or any other color. Alternatively, it can have multiple colors strategically arranged on the PCBA. The PCBA is connected to a power source and may include a control circuit to control the lighting pattern and timing of the plurality of LED light emitters. For example, the plurality of LED light emitters lights up on one edge of the square ring PCBA at a time or blink periodically.

In comparative examples not covered by the claims, the light source 125 is a spot light and placed in a center of the infinity mirror device between the front and bottom mirrors. An object in place of the light source 125 may also be place in the center of the infinity mirror device between the front and bottom mirrors.

Referring to Fig. 15C again, the light dispersion lens 1536 is made of a square-ring transparent material doped with light-scattering particulars. The transparent material, for example, is an acrylic. The light dispersion lens 1536 is smaller in dimension than the light source 125, and disposed in the same plane and in the internal space of the light source 125. Both the light source 125 and the light dispersion lens 1536 are disposed in the rear frame sub-assembly 1510 which is covered by the front bezel sub-assembly 1520 in the finished assembly.

As shown in Figs. 15A to 15C, an infinity mirror device according to the present invention comprises a first mirror 113 having a convex first reflective surface secured to a bottom of a rear frame 1512 with a front opening, the convex first reflective surface facing the front opening of the rear frame 1512; a partially transparent second mirror 102 secured to a front bezel 1525 fastened to the front opening of the rear frame 1512, wherein the second mirror 102 is kept a predetermined distance from the first mirror 113, and the second mirror 102 has a second reflective surface facing the convex first reflective surface; and a light source 125 disposed next to an internal side wall of the rear frame 1512 in a space between the first and the second mirror 102.

The second reflective surface is convex toward the first reflective surface.

The embodiments described above are examples of the claimed invention. The scope of protection is defined by the appended claims.

## Claims

1. An infinity mirror device, comprising:
a first mirror (113) having a convex first reflective surface;
a second mirror (102) having a second reflective surface facing the first reflective surface and being partially transparent, and
a light source (125) disposed in a space between the first and the second mirror (113, 102),
wherein the first and second mirror (113, 102) are spaced apart by a predetermined distance;
said infinity mirror device further comprising a rear frame (1512) having a front opening and a front bezel (1525) fastened to the front opening of the rear frame (1512);
**characterized in that** the second mirror (102) is secured to the front bezel (1525) such that the front bezel (1525) is located between the second mirror (102) and the rear frame (1512), wherein the rear frame (1512) is of rectangular shape and the light source (125) is disposed next to an internal side wall of the rear frame (1512) in the space between the first mirror (113) and the second mirror (102).

2. The infinity mirror device of claim 1, wherein the first reflective surface has a Fresnel lens structure.

3. The infinity mirror device of claim 1 or 2, wherein the first mirror (113) is partially transparent.

4. The infinity mirror device of any of the preceding claims, wherein the second reflective surface is flat.

5. The infinity mirror device of any of claims 1 to 3, wherein the second reflective surface is convex.

6. The infinity mirror device of any of the preceding claims, wherein the light source (125) is disposed at a periphery of either the first or the second mirror (113, 102).

7. The infinity mirror device of any of the preceding claims, wherein the light source (125) has a width L of less than 50 mm, L being a distance between two edges of the light source (125), and wherein a radius of the convex first reflective surface is between 600 mm and 1200 mm.

8. The infinity mirror device of any of the preceding claims, wherein the second mirror (102) has the shape selected from square, circle and diamond.

9. The infinity mirror device of any of the preceding claims, wherein the first mirror (113) is made of a stamped metal sheet.

10. The infinity mirror device of any of claims 1 to 8, wherein the first mirror (113) is made of a molded plastic sputtered with a metal layer to form the first reflective surface.

11. The infinity mirror device of any of the preceding claims, wherein the light source (125) includes a plurality of LED light emitters mounted on a printed circuit board with a light dispersion lens (1536) disposed in front of the plurality of LED light emitters.

12. The infinity mirror device of claim 11, wherein the printed circuit board has the shape of a square ring and the light dispersion lens (1536) is smaller in dimension than the light source (125) and disposed in the same plane and in an internal space of the light source (125).

13. The infinity mirror device of any of the preceding claims, wherein
the first mirror (113) is secured to a bottom of the rear frame (1512) with the convex first reflective surface facing the front opening of the rear frame (1512).

14. The infinity mirror device of claim 13, when dependent on any of claims 1 to 3 or 5 to 12, wherein
the second reflective surface of the second mirror (102) is convex toward the convex first reflective surface of the first mirror (113).

15. The infinity mirror device of any of the preceding claims, wherein
the rear frame (1512) is part of a rear frame assembly (1510) including the first mirror (113) and a first reflective sheet (1517) which is disposed on side walls of the rear frame (1512) for reflecting light into an internal space of the rear frame (1512), and
the front bezel (1525) is part of a front bezel sub-assembly (1520) including a second reflective sheet (1522) and the second mirror (102),
the second reflective sheet (1522) is disposed on side walls of the front bezel (1525) for reflecting light into the internal space of the front bezel (1525) and the second mirror (102) is mounted by means of a double-sided tape (1527) to a front side of the front bezel (1525), and
the rear frame assembly (1510) and the front bezel sub-assembly (1520) are assembled to form the infinity mirror device.

## Patentansprüche

1. Unendlichkeitsspiegelvorrichtung, umfassend:
einen ersten Spiegel (113) mit einer konvexen ersten reflektierenden Oberfläche;
einen zweiten Spiegel (102) mit einer zweiten reflektierenden Oberfläche, die der ersten reflektierenden Oberfläche zugewandt und teilweise transparent ist, und
eine Lichtquelle (125), die in einem Raum zwischen dem ersten und dem zweiten Spiegel (113, 102) angeordnet ist,
wobei der erste und der zweite Spiegel (113, 102) unter einem vorbestimmten Abstand zueinander angeordnet sind;
wobei die Unendlichkeitsspiegelvorrichtung ferner einen hinteren Rahmen (1512) mit einer vorderen Öffnung und eine an der vorderen Öffnung des hinteren Rahmens (1512) befestigte vordere Einfassung (1525) umfasst;
**dadurch gekennzeichnet, dass** der zweite Spiegel (102) so an der vorderen Einfassung (1525) befestigt ist, dass die vordere Einfassung (1525) zwischen dem zweiten Spiegel (102) und dem hinteren Rahmen (1512) angeordnet ist, wobei der hintere Rahmen (1512) eine rechteckige Form aufweist und die Lichtquelle (125) neben einer inneren Seitenwand des hinteren Rahmens (1512) in dem Raum zwischen dem ersten Spiegel (113) und dem zweiten Spiegel (102) angeordnet ist.

2. Unendlichkeitsspiegelvorrichtung nach Anspruch 1, wobei die erste reflektierende Oberfläche eine Fresnel-Linsenstruktur aufweist.

3. Unendlichkeitsspiegelvorrichtung nach Anspruch 1 oder 2, wobei der erste Spiegel (113) teilweise transparent ist.

4. Unendlichkeitsspiegelvorrichtung nach einem der vorhergehenden Ansprüche, wobei die zweite reflektierende Oberfläche flach ausgebildet ist.

5. Unendlichkeitsspiegelvorrichtung nach einem der Ansprüche 1 bis 3, wobei die zweite reflektierende Oberfläche konvex ausgebildet ist.

6. Unendlichkeitsspiegelvorrichtung nach einem der vorhergehenden Ansprüche, wobei die Lichtquelle (125) an einem Rand entweder des ersten oder des zweiten Spiegels (113, 102) angeordnet ist.

7. Unendlichkeitsspiegelvorrichtung nach einem der vorhergehenden Ansprüche, wobei die Lichtquelle (125) eine Breite L von weniger als 50 mm hat, wobei L ein Abstand zwischen zwei Ränders der Lichtquelle (125) ist, und wobei der Radius der konvexen ersten reflektierenden Oberfläche zwischen 600 mm und 1200 mm liegt.

8. Unendlichkeitsspiegelvorrichtung nach einem der vorhergehenden Ansprüche, wobei der zweite Spiegel (102) die Form eines Quadrats, Kreises oder Raute hat.

9. Unendlichkeitsspiegelvorrichtung nach einem der vorhergehenden Ansprüche, wobei der erste Spiegel (113) aus einem geprägten Metallblech besteht.

10. Unendlichkeitsspiegelvorrichtung nach einem der Ansprüche 1 bis 10, wobei der erste Spiegel (113) aus einem geformten Kunststoff besteht, der mit einer Metallschicht besputtert ist, um die erste reflektierende Oberfläche zu bilden.

11. Unendlichkeitsspiegelvorrichtung nach einem der vorhergehenden Ansprüche, wobei die Lichtquelle (125) eine Vielzahl von LED-Lichtemittern umfasst, die auf einer Leiterplatte angebracht sind, wobei eine Lichtzerstreuungslinse (1536) vor der Vielzahl von LED-Lichtemittern angeordnet ist.

12. Unendlichkeitsspiegelvorrichtung nach Anspruch 11, wobei die Vielzahl von LED-Lichtemittern auf einer Leiterplatte in Form eines quadratischen Rings angebracht sind und die Lichtzerstreuungslinse (1536) hinsichtlich ihrer Abmessungen kleiner iar als die Lichtquelle (125) und in derselben Ebene sowie in einem Innenraum der Lichtquelle (125) angeordnet ist.

13. Unendlichkeitsspiegelvorrichtung nach einem der vorhergehenden Ansprüche, wobei
der erste Spiegel (113) an einer Unterseite des hinteren Rahmens (1512) befestigt ist, wobei die konvexe erste reflektierende Oberfläche der vorderen Öffnung des hinteren Rahmens (1512) zugewandt ist.

14. Unendlichkeitsspiegelvorrichtung nach Anspruch 13, sofern dieser auf einen der Ansprüche 1 bis 3 oder 5 bis 12 rückbezogen ist, wobei
die zweite reflektierende Oberfläche des zweiten Spiegels (102) zur konvexen ersten reflektierenden Oberfläche des ersten Spiegels (113) hin konvex ausgebildet ist.

15. Unendlichkeitsspiegelvorrichtung nach einem der vorhergehenden Ansprüche, wobei
der hintere Rahmen (1512) Teil einer hinteren Rahmen-Baugruppe (1510) ist, die den ersten Spiegel (113) und eine erste reflektierende Folie (1517) umfasst, die an den Seitenwänden des hinteren Rahmens (1512) angeordnet ist, um Licht in einen Innenraum des hinteren Rahmens (1512) zu reflektieren, und
die vordere Einfassung (1525) Teil einer vorderen Einfassungs-Teilbaugruppe (1520) ist, die eine zweite reflektierende Folie (1522) und den zweiten Spiegel (102) umfasst,
die zweite reflektierende Folie (1522) an den Seitenwänden der vorderen Einfassung (1525) angeordnet ist, um Licht in den Innenraum der vorderen Einfassung (1525) zu reflektieren, und der zweite Spiegel (102) mittels eines doppelseitigen Klebebands (1527) an einer Vorderseite der vorderen Einfassung (1525) befestigt ist, und
die hintere Rahmen-Baugruppe (1510) und die vordere Einfassungs-Teilbaugruppe (1520) zusammengesetzt sind, um die Unendlichkeitsspiegelvorrichtung zu bilden.

## Revendications

1. Un dispositif miroir à l'infini, comprenant :
un premier miroir (113) présentant une première surface réfléchissante convexe ;
un deuxième miroir (102) présentant une deuxième surface réfléchissante tournée vers la première surface réfléchissante et étant partiellement transparent, et
une source lumineuse (125) disposée dans un espace entre les premier et deuxième miroirs (113, 102),
dans lequel les premier et deuxième miroirs (113, 102) sont espacés d'une distance prédéterminée ;
ledit dispositif miroir à l'infini comprenant en outre un cadre arrière (1512) présentant une ouverture avant et un cadre avant (1525) fixé à l'ouverture avant du cadre arrière (1512) ;
**caractérisé en ce que** le deuxième miroir (102) est fixé au cadre avant (1525) de telle sorte que le cadre avant (1525) soit situé entre le deuxième miroir (102) et le cadre arrière (1512), le cadre arrière (1512) étant de forme rectangulaire et la source lumineuse (125) étant disposée à proximité d'une paroi latérale interne du cadre arrière (1512), dans l'espace situé entre le premier miroir (113) et le deuxième miroir (102).

2. Le dispositif miroir à l'infini selon la revendication 1, dans lequel la première surface réfléchissante présente une structure de lentille de Fresnel.

3. Le dispositif miroir à l'infini selon la revendication 1 ou 2, dans lequel le premier miroir (113) est partiellement transparent.

4. Le dispositif miroir à l'infini selon l'une quelconque des revendications précédentes, dans lequel la deuxième surface réfléchissante est plane.

5. Dispositif miroirs à l'infini selon l'une quelconque des revendications 1 à 3, dans lequel la deuxième surface réfléchissante est convexe.

6. Le dispositif miroirs à l'infini selon l'une quelconque des revendications précédentes, dans lequel la source lumineuse (125) est disposée à la périphérie soit du premier miroir, soit du deuxième miroir (113, 102).

7. Le dispositif miroir à l'infini selon l'une quelconque des revendications précédentes, dans lequel la source lumineuse (125) présente une largeur L inférieure à 50 mm, L étant la distance entre deux bords de la source lumineuse (125), et dans lequel le rayon de la première surface réfléchissante convexe est compris entre 600 mm et 1 200 mm.

8. Le dispositif miroir à l'infini selon l'une quelconque des revendications précédentes, dans lequel le deuxième miroir (102) a une forme choisie parmi le carré, le cercle et le losange.

9. Le dispositif miroir à l'infini selon l'une quelconque des revendications précédentes, dans lequel le premier miroir (113) est constitué d'une tôle emboutie.

10. Le dispositif miroir à l'infini selon l'une quelconque des revendications 1 à 8, dans lequel le premier miroir (113) est constitué d'une pièce moulée en plastique sur laquelle a été déposée par pulvérisation cathodique une couche métallique pour former la première surface réfléchissante.

11. Le dispositif miroirs à l'infini selon l'une quelconque des revendications précédentes, dans lequel la source lumineuse (125) comprend une pluralité d'émetteurs lumineux à LED montés sur une carte de circuit imprimé, une lentille de dispersion de la lumière (1536) étant disposée devant ladite pluralité d'émetteurs lumineux à LED.

12. Le dispositif miroir à l'infini selon la revendication 11, dans lequel la carte de circuit imprimé a la forme d'un anneau carré et la lentille de dispersion de la lumière (1536) a des dimensions inférieures à celles de la source lumineuse (125) et est disposée dans le même plan et dans un espace interne de la source lumineuse (125).

13. Le dispositif miroir à l'infini selon l'une quelconque des revendications précédentes, dans lequel
le premier miroir (113) est fixé à la face inférieure du cadre arrière (1512), sa première surface réfléchissante convexe étant tournée vers l'ouverture avant du cadre arrière (1512).

14. Le dispositif miroir à l'infini selon la revendication 13, lorsqu'il dépend de l'une quelconque des revendications 1 à 3 ou 5 à 12, dans lequel
la deuxième surface réfléchissante du deuxième miroir (102) est convexe en direction de la première surface réfléchissante convexe du premier miroir (113).

15. Le dispositif miroir à l'infini selon l'une quelconque des revendications précédentes, dans lequel
le cadre arrière (1512) fait partie d'un ensemble de cadre arrière (1510) comprenant le premier miroir (113) et une première feuille réfléchissante (1512), qui est disposée sur les parois latérales du cadre arrière (1512) pour réfléchir la lumière vers un espace interne du cadre arrière (1512), et
le cadre avant (1525) fait partie d'un sous-ensemble de cadre avant (1520) comprenant une deuxième feuille réfléchissante (1522) et le deuxième miroir (102),
la deuxième feuille réfléchissante (1522) est disposée sur les parois latérales du cadre avant (1525) afin de réfléchir la lumière vers l'espace intérieur du cadre avant (1525) et le deuxième miroir (102) est fixé au moyen d'un ruban adhésif double face (1527) sur la face avant du cadre avant (1525), et
l'ensemble de cadre arrière (1510) et le sous-ensemble de cadre avant (1520) sont assemblés pour former le dispositif miroir à l'infini.
